# EUROPEAN PATENT APPLICATION

(11) **EP 4 803 489 A1**
(43) Date of publication of application: **09.09.2026**
(21) Application number: 24885388.9
(22) Date of filing: 08.10.2024
(51) Int. Cl.: C02F 1/469, B01D 61/44, C22B 26/12

(54) **LITHIUM RECOVERY DEVICE**

(30) Priority: 30.10.2023 JP 2023185268
(71) Applicant: NATIONAL INSTITUTES FOR QUANTUM SCIENCE AND TECHNOLOGY, Chiba-shi, Chiba 263-8555 (JP)
(72) Inventor: HOSHINO, Tsuyoshi, Chiba-shi Chiba 263-8555 (JP); MATSUMOTO, Takanori, Chiba-shi Chiba 263-8555 (JP); MORITA, Kenji, Chiba-shi Chiba 263-8555 (JP)
(74) Representative: Winter, Brandl - Partnerschaft mbB
(86) International application number: PCT/JP2024/035964
(87) International publication number: WO 2025/094613

(57) **Abstract**

Provided are a metal ion recovery apparatus and a metal ion recovery method in which an ion-permeable membrane can be used stably over a long period of time.

A lithium recovery apparatus 1 of the present invention includes a treatment tank 2 accommodating a stock solution 100, which is an aqueous solution containing lithium, and a recovery solution 200, which is an aqueous solution; an ion-permeable membrane 3 disposed in the treatment tank 2 so as to partition the stock solution 100 and the recovery solution 200 and composed mainly of a lithium ion conductor; a positive electrode 4 provided on one main surface of the ion-permeable membrane 3; a negative electrode 5 provided on the other main surface of the ion-permeable membrane 3; and a current collector 6 provided between the ion-permeable membrane 3 and the positive electrode 4, or between the ion-permeable membrane 3 and the negative electrode 5. A contact area between the ion-permeable membrane 3 and the current collector 6 is 5% or less of a total area of the main surface of the ion-permeable membrane 3.

## Description

### Technical Field

The present invention relates to, for example, a lithium recovery apparatus that recovers lithium from an aqueous solution containing lithium.

### Background Art

In recent years, lithium secondary batteries and the like have been used in large quantities as secondary batteries for various devices, and development of technology for efficiently recovering metal ions used in such secondary batteries, particularly lithium ions, has been strongly desired. In addition, lithium secondary batteries are also used in hybrid cars, electric vehicles, and the like that are being developed in response to carbon dioxide emission regulations. Accordingly, a lithium recovery apparatus that extracts a lithium ion extract solution from a treatment member for a lithium secondary battery and recovers lithium from the lithium ion extract solution has been proposed (Patent Literature 1).

The lithium recovery apparatus described in Patent Literature 1 includes a lithium-ion-conductive electrolyte membrane formed of lithium lanthanum titanium oxide or the like, a treatment tank partitioned by the lithium-ion-conductive electrolyte membrane into a supply tank and a recovery tank, a first electrode and a second electrode respectively provided on both side surfaces of the lithium-ion-conductive electrolyte membrane, and a power supply for applying a voltage to the first electrode and the second electrode.

Here, in principle, only lithium ions permeate between the first electrode and the second electrode (the lithium-ion-conductive electrolyte membrane); however, when the voltage applied to the electrodes is increased in order to improve the lithium recovery speed, a flow of electrons occurs, although in a trace amount. These electrons reduce titanium (Ti) in the lithium-ion-conductive electrolyte membrane from tetravalent to trivalent, resulting in oxygen vacancies in the lithium-ion-conductive electrolyte membrane. When oxygen vacancies are formed in the lithium-ion-conductive electrolyte membrane, the mechanical strength of the lithium-ion-conductive electrolyte membrane decreases. Therefore, there is room for improvement in the long-term stability of the lithium-ion-conductive electrolyte membrane.

### Citation List

### Patent Literature

Patent Literature 1: JP 2019-141807 A

### Summary of Invention

### Technical Problem

In view of the above-described problems, an object of the present invention is to provide a lithium recovery apparatus in which an ion-permeable membrane can be used stably over a long period of time.

### Solution to Problem

The present invention provides a lithium recovery apparatus that moves lithium ions from a stock solution, which is an aqueous solution containing lithium, to a recovery solution, which is an aqueous solution, and recovers lithium in the recovery solution, the lithium recovery apparatus including: a treatment tank accommodating the stock solution and the recovery solution; an ion-permeable membrane disposed in the treatment tank so as to partition the stock solution and the recovery solution, the ion-permeable membrane being composed mainly of a lithium ion conductor; a positive electrode provided on one main surface of the ion-permeable membrane; a negative electrode provided on the other main surface of the ion-permeable membrane; and a current collector provided between the ion-permeable membrane and the positive electrode, or between the ion-permeable membrane and the negative electrode, in which a total contact area between the ion-permeable membrane and the current collector is 5% or less of a total area of the main surface of the ion-permeable membrane. Advantageous Effects of Invention

According to the present invention, it is possible to provide a lithium recovery apparatus in which an ion-permeable membrane can be used stably over a long period of time.

### Brief Description of Drawings

FIG. 1 is a schematic explanatory diagram showing the overall configuration of a lithium recovery apparatus.
FIG. 2 is an explanatory diagram illustrating a current collector of the present invention and its surrounding configuration.
FIG. 3 is an explanatory diagram illustrating a contact structure between a current collector and an ion-permeable membrane of the present invention.
FIG. 4 is a graph showing a relationship between a contact area between the current collector and the ion-permeable membrane and a current value.
FIG. 5 is an explanatory diagram illustrating an example configuration of a current collector of a modified embodiment.
FIG. 6 is an explanatory diagram illustrating another example configuration of the current collector of the modified embodiment.
FIG. 7 is an explanatory diagram illustrating another example configuration of the current collector of the modified embodiment.
FIG. 8 is an explanatory diagram illustrating another example configuration of the current collector of the modified embodiment.
FIG. 9 is a graph showing a relationship between the presence or absence of the current collector in each of the positive and negative electrodes and the current value.

### Description of Embodiments

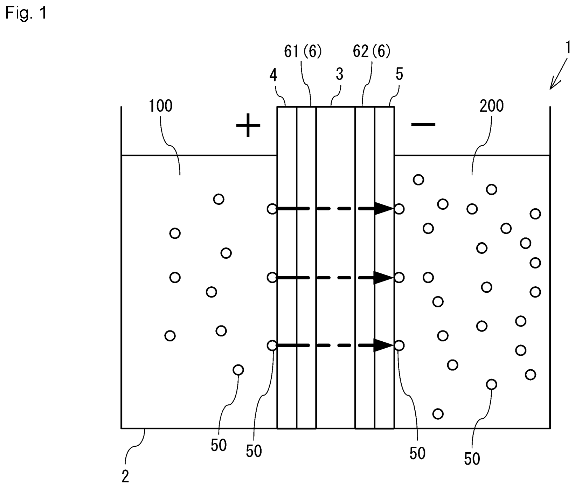

Hereinafter, an embodiment of the present invention will be described with reference to the drawings. FIG. 1 is a schematic explanatory diagram showing the overall configuration of a lithium recovery apparatus 1 according to a first embodiment of the present invention. It should be noted that the lithium recovery apparatus 1 according to an embodiment of the present invention is merely one embodiment of the lithium recovery apparatus of the present invention, and the present invention is not limited to the lithium recovery apparatus of the embodiment. In addition, in the present specification, "lithium" means both lithium and lithium ions, and is to be appropriately construed unless a technical contradiction arises.

The lithium recovery apparatus 1 is an apparatus that moves lithium ions 50 from a stock solution 100, which is an aqueous solution containing lithium (lithium ions 50), to a recovery solution 200, which is an aqueous solution, and recovers lithium (lithium ions 50) in the recovery solution 200. As shown in FIG. 1, the lithium recovery apparatus 1 includes a treatment tank 2, an ion-permeable membrane (selective permeation membrane) 3, a positive electrode 4, a negative electrode 5, and a current collector 6.

The treatment tank 2 accommodates the stock solution 100 and the recovery solution 200. As the stock solution 100, a lithium ion extract solution can be used. For example, the lithium ion extract solution is a lithium ion extract solution extracted from a treatment member of a lithium secondary battery. The lithium ion extract solution is not particularly limited, and examples thereof include one extracted from a treatment member of a lithium secondary battery containing a sulfide-based solid electrolyte, that is, a lithium ion extract solution containing a sulfide-based solid electrolyte.

It should be noted that, as long as the stock solution 100 is an aqueous solution containing lithium (lithium ions 50), the effects of the present invention of recovering the lithium ions 50 can be obtained. Therefore, the stock solution containing lithium (lithium ions 50) is not limited to the lithium ion extract solution extracted from a treatment member of a lithium secondary battery, and, for example, concentrated water obtained by concentrating seawater, salt lake brine, mining wastewater, geothermal water, or a combination of any of these by means such as evaporation may be used. In addition, any of these may be used alone, or a combination of a plurality of kinds may be used.

The recovery solution 200 is a liquid for recovering the lithium ions 50 that have permeated through the ion-permeable membrane 3. The recovery solution 200 is not particularly limited as long as it is a solvent in which the lithium ions 50 can be dissolved. The recovery solution 200 may be, for example, the same as the solvent of the stock solution 100. As the recovery solution 200, for example, water (preferably water containing a small amount of metal ions, such as pure water or RO water (reverse-osmosis-permeated water)) is preferred.

The ion-permeable membrane 3 is a sheet-shaped (plate-shaped) member, is disposed in the treatment tank 2 so as to partition the stock solution 100 and the recovery solution 200, and is capable of selectively allowing the lithium ions 50 to permeate through the ion-permeable membrane 3.

In addition, the ion-permeable membrane 3 is composed mainly of a lithium ion conductor. In the present embodiment, the ion-permeable membrane 3 is formed of a super lithium-ion conductor (ion conductor) having particularly high ionic conductivity. Specifically, as a material constituting the ion-permeable membrane 3, lithium lanthanum titanate: (Lix,Lay)TiOz (where x=3a-2b, y=2/3-a, z=3-b, 0<a≤1/6, 0≤b≤0.06, x>0) (hereinafter, LLTO) can be used. This material can be obtained, for example, as a sintered body produced by mixing particles formed of this material with a sintering aid and the like and sintering the mixture at a high temperature (1,000°C or higher). In this case, the surface of the ion-permeable membrane 3 can also be configured as a porous body in which fine particles formed of LLTO are bonded (sintered), and thus the effective area of the surface of the ion-permeable membrane 3 can be increased. It should be noted that the ion-permeable membrane 3 may also have a Li adsorption layer formed as a thin layer on its surface on the stock solution 100 side (the positive electrode 4 side).

The average thickness of the ion-permeable membrane 3 is preferably, for example, 0.01 to 20 mm, and more preferably 0.1 to 5 mm. When the average thickness is 20 mm or less, lithium ions can be efficiently conducted, which is preferable. On the other hand, when the average thickness is 0.01 mm or more, durability is improved, which is preferable.

In addition, the external shape of the ion-permeable membrane 3 in plan view (when viewed from a direction perpendicular to a main surface) has a shape along the shape of the treatment tank 2. For example, the maximum dimension of the ion-permeable membrane 3 in plan view is preferably 10 to 3,000 mm, more preferably 250 to 1,000 mm, and still more preferably 300 to 500 mm.

In particular, when the ion-permeable membrane 3 is a sintered body of a lithium ion conductor, the average thickness is preferably 0.2 to 2.0 mm and the maximum dimension in plan view is preferably 30 to 100 mm. Such an ion-permeable membrane 3 can be easily and efficiently manufactured, and the lithium ions 50 are efficiently conducted. For example, the ion-permeable membrane 3 may have a plan-view square shape having an average thickness of about 0.5 mm and a side length of about 50 mm. In addition, the ion-permeable membrane 3 may also be used by joining a plurality of membranes in the main-surface direction, as necessary.

The positive electrode 4 is provided on one main surface (positive-electrode-side surface) of the ion-permeable membrane 3. The negative electrode 5 is provided on the other main surface (negative-electrode-side surface) of the ion-permeable membrane 3. It should be noted that the main surface refers to a surface having the largest area (maximum surface) in a sheet-shaped or plate-shaped member, and the main surfaces of the ion-permeable membrane 3 include a positive-electrode-side surface and a negative-electrode-side surface.

As materials for the positive electrode 4 and the negative electrode 5, metal materials that do not cause an electrochemical reaction in the stock solution 100 or the recovery solution 200 can be appropriately used. For example, SUS, Ti, or a Ti substrate coated with Ir or Pt can be used. Each of the positive electrode 4 and the negative electrode 5 is electrically connected to a power supply (voltage applying unit) (not shown).

The current collector 6 is formed of a conductive material and is provided between the ion-permeable membrane 3 and the positive electrode 4, or between the ion-permeable membrane 3 and the negative electrode 5. As the conductive material constituting the current collector 6, a metal material that does not cause an electrochemical reaction in the stock solution 100 or the recovery solution 200 can be appropriately used. For example, the metal material constituting the current collector 6 preferably contains one or two or more elements selected from Pt, Cu, Au, Ag, C, Fe, W, Mo, Ni, Co, Cr, Ti, Ir, Mn, La, Sr, Al, Pb, Zn, and Rh, and more preferably contains one or two or more elements selected from Pt, Cu, Fe, C, Ag, Ti. Such a conductive material may be a material obtained by coating a Ti substrate with Ir or Pt, or may be an alloy such as stainless steel (SUS).

In the present embodiment, the current collector 6 includes a positive-electrode-side current collector 61 provided between the ion-permeable membrane 3 and the positive electrode 4, and a negative-electrode-side current collector 62 provided between the ion-permeable membrane 3 and the negative electrode 5.

The ion-permeable membrane 3 and the positive electrode 4 are electrically connected to each other via the positive-electrode-side current collector 61. The ion-permeable membrane 3 and the negative electrode 5 are electrically connected to each other via the negative-electrode-side current collector 62.

It should be noted that the positive-electrode-side current collector 61 is in contact with each of the ion-permeable membrane 3 and the positive electrode 4, or is disposed so as to be close thereto to an extent that electrical connection is ensured. The negative-electrode-side current collector 62 is in contact with each of the ion-permeable membrane 3 and the negative electrode 5, or is disposed so as to be close thereto to an extent that electrical connection is ensured.

The positive-electrode-side current collector 61 more preferably has Pt, C, or Ti as a main component. This is because, on the positive electrode side, corrosive gas such as chlorine gas and/or fluorine gas may be generated by recovering the lithium ions 50 in the stock solution 100, and excellent corrosion resistance thereto can be obtained.

With the above configuration, when a predetermined voltage is applied from the power supply to each of the positive electrode 4 and the negative electrode 5, the positive-electrode-side surface and the negative-electrode-side surface of the ion-permeable membrane 3 are maintained at a constant positive potential and a constant negative potential, respectively.

The recovery of the lithium ions 50 using the lithium recovery apparatus 1 configured as described above is performed as follows. First, a predetermined amount of the stock solution 100 is supplied to the positive electrode side of the treatment tank 2, and a predetermined amount of the recovery solution 200 is supplied to the negative electrode side of the treatment tank 2. Next, the power supply is operated to set the positive electrode 4, the positive-electrode-side current collector 61, and the positive-electrode-side surface of the ion-permeable membrane 3 to a positive potential, and to set the negative electrode 5, the negative-electrode-side current collector 62, and the negative-electrode-side surface of the ion-permeable membrane 3 to a negative potential. Thus, of the lithium ions 50 contained in the stock solution 100, those that reach the positive-electrode-side surface of the ion-permeable membrane 3 permeate through the ion-permeable membrane 3 from the positive electrode side toward the negative electrode side by ionic conduction. Then, the lithium ions 50 that have permeated through the ion-permeable membrane 3 emerge on the negative-electrode-side surface and dissolve in the recovery solution 200. That is, the lithium ions 50 that have permeated through the ion-permeable membrane 3 are recovered in the recovery solution 200.

Thus, by using the lithium recovery apparatus 1, it is possible to move the lithium ions 50 from the stock solution 100 to the recovery solution 200 side and recover lithium (lithium ions 50) in the recovery solution 200.

Here, when recovering the lithium ions 50, by increasing the voltage applied to the electrodes (the positive electrode 4 and the negative electrode 5), the speed at which the lithium ions 50 permeate through the ion-permeable membrane 3 can be increased, and the lithium recovery speed can be improved.

However, when the voltage applied to the electrodes is increased, a flow of electrons occurs, although in a trace amount, thereby reducing titanium (Ti) in the ion-permeable membrane 3 from tetravalent to trivalent and causing oxygen vacancies in the ion-permeable membrane 3. Due to this titanium reduction action, the mechanical strength of the ion-permeable membrane 3 decreases, resulting in a problem from the viewpoint of long-term stability. In order to solve this problem, the present inventors devised a novel configuration of the lithium recovery apparatus 1 (particularly the current collector 6 and its surrounding structure) described below to address the issue.

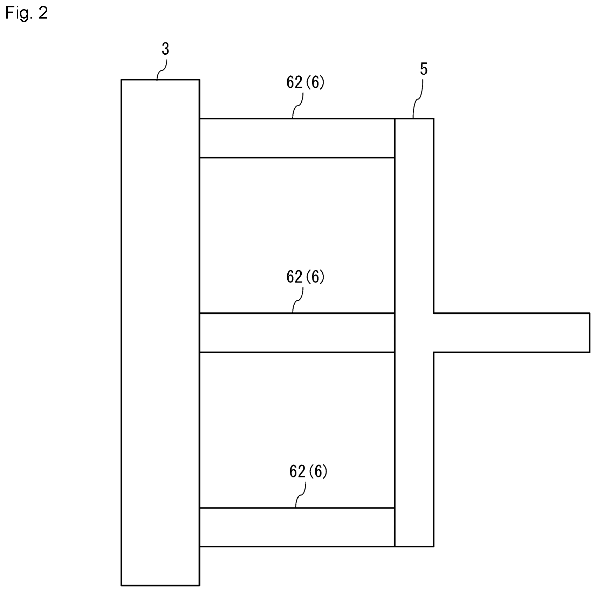

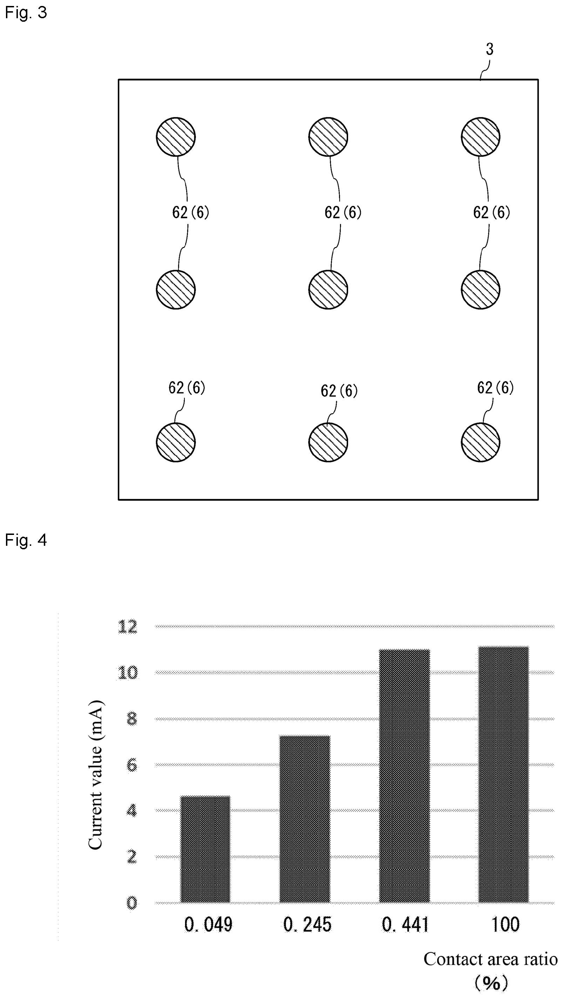

FIG. 2 is an explanatory diagram illustrating the current collector 6 of the present invention and its surrounding configuration. FIG. 3 is an explanatory diagram illustrating a contact structure between the current collector 6 of the present invention and the ion-permeable membrane 3. FIG. 4 is a graph showing a relationship between a contact area between the current collector 6 and the ion-permeable membrane 3 and a current value. Hereinafter, for convenience of description, the negative-electrode-side current collector 62 will be described as an example; however, the positive-electrode-side current collector 61 can have the same configuration.

As shown in FIGS. 2 and 3, in the lithium recovery apparatus 1 of the present invention, the negative-electrode-side current collector 62 (current collector 6) is in contact with only a portion of a main surface (negative-electrode-side surface) of the ion-permeable membrane 3.

For example, the negative-electrode-side current collector 62 (current collector 6) is composed of one or a plurality of rod-shaped members extending perpendicular to a main surface of the ion-permeable membrane 3, and only a tip end surface of each rod-shaped member is in contact with only a portion of the main surface (negative-electrode-side surface) of the ion-permeable membrane 3. Specifically, the rod-shaped member may be a cylindrical member (cylindrical member) extending in a direction perpendicular to the main surface of the ion-permeable membrane 3. In the example shown in FIG. 3, the negative-electrode-side current collector 62 is composed of a plurality of rod-shaped members. The plurality of rod-shaped members are arranged at equal intervals in an in-plane direction of the main surface of the ion-permeable membrane 3, and, in the example of FIG. 3, are arranged at equal intervals in the vertical direction and the horizontal direction in the drawing.

Here, a total contact area between the ion-permeable membrane 3 and the negative-electrode-side current collector 62 (current collector 6) (when there are a plurality of contact portions, the total contact area obtained by summing the contact areas) can be 5% or less relative to the total area of a main surface (negative-electrode-side surface) of the ion-permeable membrane 3, is preferably 1% or less, more preferably 0.5% or less, still more preferably 0.4% or less, and even more preferably 0.3% or less. It should be noted that the ratio of a contact area between the ion-permeable membrane 3 and the negative-electrode-side current collector 62 to the total area of the main surface (negative-electrode-side surface) of the ion-permeable membrane 3 may also be referred to as a contact area ratio.

In addition, the total contact area between the ion-permeable membrane 3 and the negative-electrode-side current collector 62 (current collector 6) can be 0.049% or more of the total area of the main surface (negative-electrode-side surface) of the ion-permeable membrane 3, is preferably 0.1% or more, more preferably 0.245% or more, still more preferably 0.4% or more, and even more preferably 0.441% or more.

The graph shown in FIG. 4 shows current values flowing through the ion-permeable membrane when a current collector configured with one to nine cylindrical members (a contact area ratio per cylindrical member of 0.049%) is brought into contact with the ion-permeable membrane. Three types of examples were prepared by changing the number of cylindrical members constituting the current collector (in the case of nine members, the configuration is as shown in FIG. 3): an example with a contact area ratio of 0.049%, an example with a contact area ratio of 0.245%, and an example with a contact area ratio of 0.441%. In addition, the graph shown in FIG. 4 also shows, as a comparative example, a current value when a current collector having a contact area ratio of 100% is brought into contact with the ion-permeable membrane.

It is empirically known that the current value flowing through the ion-permeable membrane is proportional to the amount of lithium recovered (lithium recovery speed); therefore, it is presumed that the larger the current value, the higher the lithium recovery speed.

As shown in FIG. 4, even when the contact area ratio was 0.049% (when there was only one cylindrical member), it was possible to secure a lithium recovery speed of about 40% of that when the contact area ratio was 100% (full-surface contact). That is, even when the contact area ratio was considerably small, it was possible to secure a certain level of lithium recovery speed (the current value per unit area was about 800 times that of the comparative example with a contact area ratio of 100%).

In addition, when the contact area ratio was 0.245% (when there were five cylindrical members), it was possible to secure a lithium recovery speed of about 65% of that in the case of full-surface contact (the current value per unit area was about 250 times that of the comparative example with a contact area ratio of 100%).

In addition, when the contact area ratio was 0.441% (when there were nine cylindrical members), it was possible to secure a lithium recovery speed of about 99% of that in the case of full-surface contact (the current value per unit area was about 220 times that of the comparative example with a contact area ratio of 100%). That is, even when the total contact area between the ion-permeable membrane 3 and the negative-electrode-side current collector 62 was about 0.441%, it is possible to secure a lithium recovery speed substantially equivalent to that in the case of full-surface contact.

From the viewpoint of the lithium recovery speed, it can be said that a contact area ratio of about 0.4% to about 0.5% is sufficient. That is, with the configuration of the present invention, the ion-permeable membrane 3 and the negative-electrode-side current collector 62 (current collector 6) do not need to be in full-surface contact.

From the viewpoint of maintaining the mechanical strength and long-term stability of the ion-permeable membrane 3, a lower contact area ratio is desirable. In the comparative example with a contact area ratio of 100%, the ion-permeable membrane 3 exhibited discoloration due to the titanium reduction action, and its mechanical strength decreased by about 30%. Here, the present inventors have verified in advance that, when the ion-permeable membrane is significantly discolored (discolored from beige to gray) due to the titanium reduction action, the mechanical strength thereof also significantly decreases accordingly. In contrast to the comparative example described above, in the example with a contact area ratio of 0.049%, the example with a contact area ratio of 0.245%, and the example with a contact area ratio of 0.441%, almost no discoloration due to the titanium reduction action was observed, and thus it can be considered that the decrease in mechanical strength is also very slight. That is, in each example, it is possible to suppress a decrease in mechanical strength as compared with the comparative example with a contact area ratio of 100%.

Accordingly, from the viewpoint of achieving both maintenance of the mechanical strength and ensuring long-term stability of the ion-permeable membrane 3 and obtaining a sufficient lithium recovery speed, the total contact area between the ion-permeable membrane 3 and the negative-electrode-side current collector 62 is preferably in a range of 0.4% to 0.5%, and more preferably in a range of 0.44% to 0.45%.

Here, when there are a plurality of contact portions between the ion-permeable membrane 3 and the negative-electrode-side current collector 62, the contact area between the ion-permeable membrane 3 and the negative-electrode-side current collector 62 at each contact portion (a contact area per contact portion) can be 0.05% or less of the total area of the main surface (negative-electrode-side surface) of the ion-permeable membrane 3, and is preferably 1% or less, more preferably 0.5% or less, still more preferably 0.4% or less, and even more preferably 0.3% or less. By reducing the contact area per contact portion, the flow of electrons in the ion-permeable membrane 3 can be further reduced, the titanium reduction action can be suppressed, and maintenance of the mechanical strength and ensuring long-term stability of the ion-permeable membrane 3 can be achieved.

As described above, according to the present invention, since the total contact area between the ion-permeable membrane 3 and the negative-electrode-side current collector 62 is 5% or less relative to the total area of the main surface (negative-electrode-side surface) of the ion-permeable membrane 3, the total contact area between the ion-permeable membrane 3 and the negative-electrode-side current collector 62 can be reduced. Accordingly, the flow of electrons in the ion-permeable membrane 3 can be reduced, the titanium reduction action can be suppressed, and maintenance of the mechanical strength and ensuring long-term stability of the ion-permeable membrane 3 can be achieved.

In addition, according to the present invention, since the total contact area between the ion-permeable membrane 3 and the negative-electrode-side current collector 62 is 0.5% or less relative to the total area of the main surface (negative-electrode-side surface) of the ion-permeable membrane 3, the flow of electrons in the ion-permeable membrane 3 can be further reduced to further suppress the titanium reduction action, and maintenance of the mechanical strength and ensuring long-term stability of the ion-permeable membrane 3 can be achieved.

Furthermore, according to the present invention, since the total contact area between the ion-permeable membrane 3 and the negative-electrode-side current collector 62 is 0.4% or more relative to the total area of the main surface (negative-electrode-side surface) of the ion-permeable membrane 3, it is possible to secure a sufficient lithium recovery speed that is substantially equivalent to that in the case of full-surface contact.

Furthermore, according to the present invention, the current collector 6 is composed of rod-shaped members extending perpendicular to the main surface of the ion-permeable membrane 3, and only the tip end surfaces of the rod-shaped members are in contact with the main surface (negative-electrode-side surface) of the ion-permeable membrane 3. With this configuration, it is possible to reduce the total contact area between the ion-permeable membrane 3 and the negative-electrode-side current collector 62 while increasing the mechanical strength of the current collector 6 in the thickness direction of the ion-permeable membrane 3.

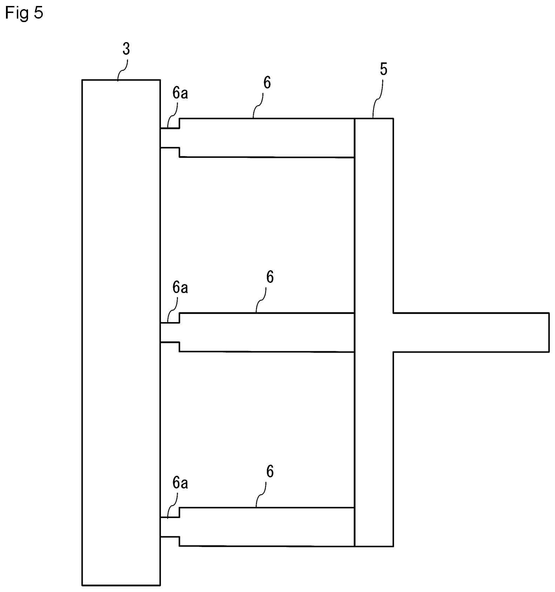

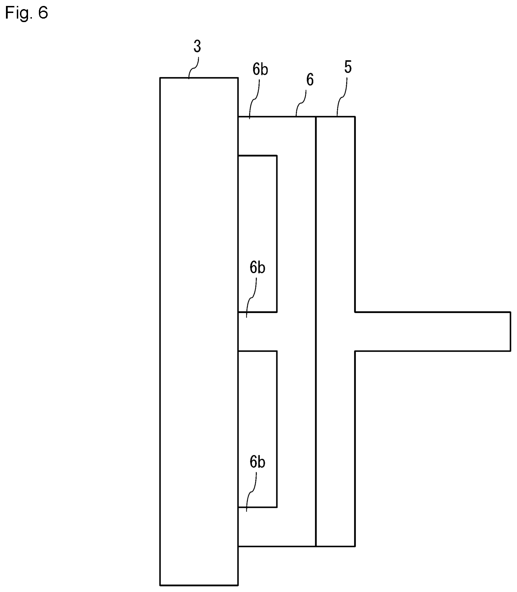

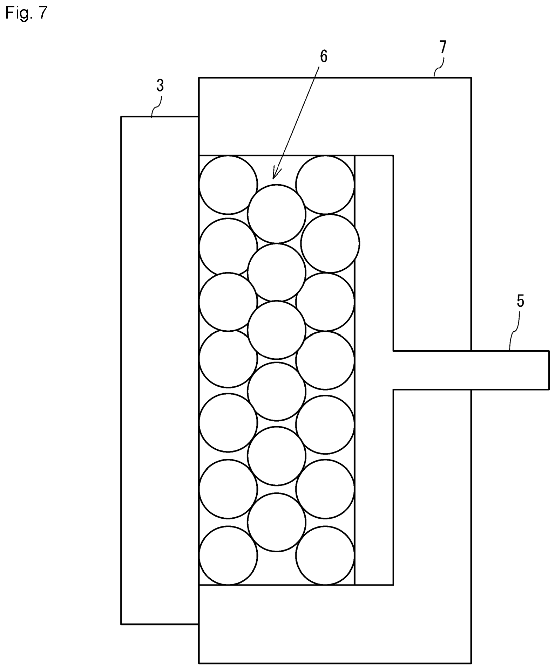

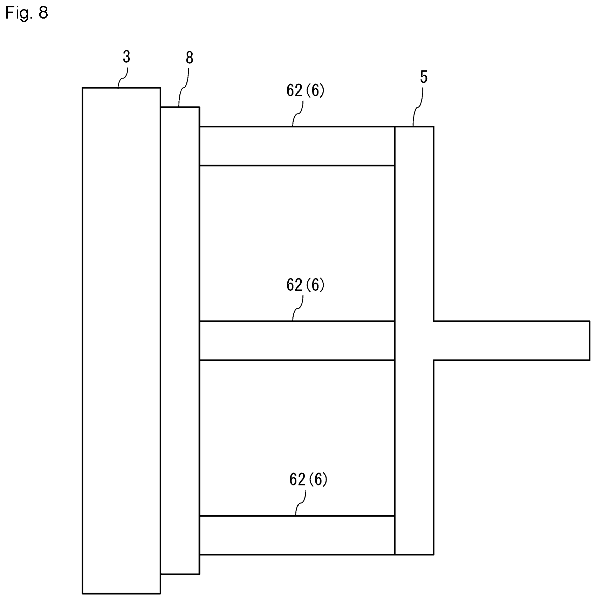

FIG. 5 is an explanatory diagram illustrating an example configuration of a current collector 6 of a modified embodiment. FIG. 6 is an explanatory diagram illustrating another example configuration of the current collector 6 of the modified embodiment. FIG. 7 is an explanatory diagram illustrating another example configuration of the current collector 6 of the modified embodiment. FIG. 8 is an explanatory diagram illustrating another example configuration of the current collector 6 of the modified embodiment.

The current collector 6 and its surrounding configuration are not limited to the configuration of the above-described embodiment. For example, as shown in FIG. 5, a small-diameter protrusion 6a may be formed at a tip end of the rod-shaped member constituting the current collector 6, such that a tip end surface of the protrusion 6a is in contact with the main surface (negative-electrode-side surface) of the ion-permeable membrane 3. Here, an outer diameter of the protrusion 6a is smaller than an outer diameter of a portion of the rod-shaped member other than the protrusion 6a. With this configuration, it is possible to further reduce the total contact area between the ion-permeable membrane 3 and the current collector 6 while increasing the mechanical strength of the current collector 6 in a direction perpendicular to the main surface of the ion-permeable membrane 3. Accordingly, it is possible to further enhance maintenance of the mechanical strength and long-term stability of the ion-permeable membrane 3. In particular, when fixing the current collector 6, the positive electrode 4, and the negative electrode 5 to the ion-permeable membrane 3, they may be fixed while being pressed toward the thickness direction of the ion-permeable membrane 3. In such a fixing structure, the configuration shown in FIG. 5, in which the current collector 6 has high mechanical strength in the thickness direction of the ion-permeable membrane 3, is particularly preferable.

As shown in FIG. 6, the current collector 6 may be composed of a member having a plurality of protrusions 6b protruding toward the ion-permeable membrane 3. In this case, the overall mechanical strength of the current collector 6 can be further increased. In addition, the degree of freedom in the shape of the current collector 6 can be increased, and the current collector 6 can be formed into an optimum shape in accordance with the configuration around the current collector 6.

Furthermore, as shown in FIG. 7, the ion-permeable membrane 3 and the current collector 6 may be configured to be in contact with each other at a plurality of point contacts. For example, the current collector 6 may be composed of a plurality of granular members. For example, as the granular members, metal beads having pure titanium as a base material and having platinum plating with a thickness of 1 µm applied to the surface can be used. In addition, when the current collector 6 is composed of a plurality of granular members, a support frame 7 for supporting the plurality of granular members at predetermined positions may be provided. With this configuration, the number of contact portions between the ion-permeable membrane 3 and the current collector 6 can be increased. Accordingly, the contact area per contact portion can be reduced, the titanium reduction action can be more effectively suppressed, and maintenance of the mechanical strength and ensuring long-term stability of the ion-permeable membrane 3 can be achieved.

Furthermore, as shown in FIG. 8, an insulating layer 8 may be provided between the ion-permeable membrane 3 and the current collector 6. For example, the insulating layer 8 can be formed by an insulating film composed of an insulating material (for example, a known cation exchange membrane). With this configuration, the ion-permeable membrane 3 and the current collector 6 are separated from each other. Accordingly, it is possible to prevent electrons from flowing in the ion-permeable membrane 3, prevent the titanium reduction action, and further enhance maintenance of the mechanical strength and long-term stability of the ion-permeable membrane 3.

The lithium recovery apparatus of the present invention corresponds to the lithium recovery apparatus 1 of the above-described embodiment. Similarly, the treatment tank corresponds to the treatment tank 2, the ion-permeable membrane corresponds to the ion-permeable membrane 3, the positive electrode corresponds to the positive electrode 4, the negative electrode corresponds to the negative electrode 5, the current collector corresponds to the current collector 6, and the insulating layer corresponds to the insulating layer 8; however, the present invention is not limited to the present embodiment, and various other embodiments can be adopted. In addition, the specific configurations and the like described in the above embodiment are merely examples, and can be appropriately modified according to an actual product.

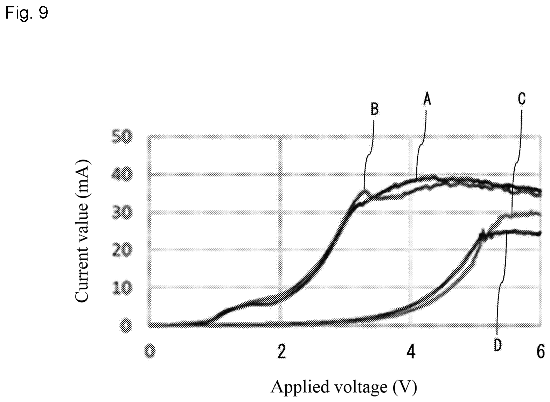

FIG. 9 is a graph showing a relationship between the presence or absence of the current collector 6 in the positive and negative electrodes and the current value. FIG. 9 shows current values with respect to applied voltages in Examples A to D in which the presence or absence of the current collector 6 in the positive and negative electrodes differs from each other. Example A is an example including both the positive-electrode-side current collector 61 and the negative-electrode-side current collector 62. Example B is an example including only the negative-electrode-side current collector 62 (without the positive-electrode-side current collector 61). Example C is an example including only the positive-electrode-side current collector 61 (without the negative-electrode-side current collector 62). Example D is an example including neither the positive-electrode-side current collector 61 nor the negative-electrode-side current collector 62 (without the current collector 6). As shown in FIG. 9, Examples A and B have substantially the same current value flowing therethrough. In addition, Examples C and D also have substantially the same current value flowing therethrough. However, Examples C and D have a smaller current value than Examples A and B. In particular, when a voltage of 3 to 4 V is applied, the difference between Examples C and D and Examples A and B becomes significant. From these results, it is considered that the presence of the negative-electrode-side current collector 62 contributes to an increase in the current value, that is, an increase in the lithium recovery speed. Therefore, it is preferable to include at least the negative-electrode-side current collector 62 (that is, to provide the current collector 6 between the ion-permeable membrane 3 and the negative electrode 5). However, the present invention is applicable to any of Examples A to D, and, by applying the present invention, the ion-permeable membrane 3 can be stably used over a long period of time in any of Examples A to D.

In the above-described embodiment, an example was described in which the lithium ions 50 are moved from the stock solution 100 to the recovery solution 200 for low recovery; however, the lithium recovery apparatus 1 of the present invention can also be used as an apparatus for separating lithium isotopes. Lithium (Li) has two stable isotopes, ⁷Li and ⁶Li. Here, by utilizing the fact that ⁷Li and ⁶Li have different permeation speeds through the ion-permeable membrane 3 (⁶Li is faster than ⁷Li), it is possible, from an aqueous solution containing ⁶Li and ⁷Li in the form of lithium ions, to recover an aqueous solution containing lithium ions having a higher isotope ratio of⁶Li than that of the aqueous solution.

In addition, when the positive electrode 4 or the negative electrode 5 and the current collector 6 are formed of the same material, the positive electrode 4 and the current collector 6 may be integrally formed, or the negative electrode 5 and the current collector 6 may be integrally formed. Even in this case, the same effects as in the above-described embodiment can be obtained.

### Industrial Applicability

The present invention can be used in industries for recovering lithium from an aqueous solution containing lithium.

### Reference Signs List

- 1: lithium recovery apparatus
- 2: treatment tank
- 3: ion-permeable membrane
- 4: positive electrode
- 5: negative electrode
- 6: current collector
- 61: positive-electrode-side current collector
- 62: negative-electrode-side current collector
- 6a: protrusion
- 6b: protrusion
- 7: support frame
- 8: insulating layer
- 100: stock solution
- 200: recovery solution

## Claims

1. A lithium recovery apparatus that moves lithium ions from a stock solution, which is an aqueous solution containing lithium, to a recovery solution, which is an aqueous solution, and recovers lithium in the recovery solution, the lithium recovery apparatus comprising:
a treatment tank accommodating the stock solution and the recovery solution;
an ion-permeable membrane disposed in the treatment tank so as to partition the stock solution and the recovery solution, the ion-permeable membrane being composed mainly of a lithium ion conductor;
a positive electrode provided on one main surface of the ion-permeable membrane;
a negative electrode provided on the other main surface of the ion-permeable membrane; and
a current collector provided between the ion-permeable membrane and the positive electrode, or between the ion-permeable membrane and the negative electrode, wherein
a total contact area between the ion-permeable membrane and the current collector is 5% or less of a total area of the main surface of the ion-permeable membrane.

2. The lithium recovery apparatus according to claim 1, wherein
a contact area between the ion-permeable membrane and the current collector is 0.5% or less of the total area of the main surface of the ion-permeable membrane.

3. The lithium recovery apparatus according to claim 1 or 2, wherein
a contact area between the ion-permeable membrane and the current collector is 0.4% or more of the total area of the main surface of the ion-permeable membrane.

4. The lithium recovery apparatus according to claim 1, 2, or 3, wherein
the current collector is composed of a plurality of rod-shaped members.

5. The lithium recovery apparatus according to any one of claims 1 to 4, wherein
the ion-permeable membrane and the current collector are in contact with each other at a plurality of point contacts.

6. The lithium recovery apparatus according to any one of claims 1 to 5, wherein
the current collector is composed of a plurality of granular members.

7. The lithium recovery apparatus according to any one of claims 1 to 6, wherein
the current collector is provided at least between the ion-permeable membrane and the negative electrode.

8. The lithium recovery apparatus according to any one of claims 1 to 7, wherein
an insulating layer is provided between the current collectors.
